# EUROPEAN PATENT SPECIFICATION

(11) **EP 4 464 520 B1**
(45) Date of publication and mention of the grant of the patent: **11.02.2026**
(21) Application number: 23190770.0
(22) Date of filing: 10.08.2023
(51) Int. Cl.: B60B 27/00, B60B 27/02, B60B 27/04, F16D 41/30

(54) **DRIVING RING AND HUB DEVICE INCLUDING THE SAME**
ANTRIEBSRING UND NABENVORRICHTUNG DAMIT
BAGUE D'ENTRAÎNEMENT ET DISPOSITIF DE MOYEU LA COMPRENANT

(30) Priority: 17.05.2023 TW 112204866 U
(43) Date of publication of application: 20.11.2024
(73) Proprietor: Powerway Industrial Co., Ltd., 358 Miaoli County (TW)
(72) Inventor: TSAI TU, SHU-TZU, 358 Miaoli County (TW)
(74) Representative: Lang, Christian

(56) References cited:
- DE-A1- 102010 033 268
- DE-A1- 102012 020 472
- US-B2- 9 212 708

## Description

### BACKGROUND OF THE INVENTION

### Field of the Invention

The present invention relates to a driving ring and a hub device including the same.

### Description of the Prior Art

Generally, the wheel of a bicycle is assembled to a hub, a shaft is passed through the hub, and the shaft is connected to the frame of the bicycle to support the wheel, for the bicycle to run on the road.

A ratchet driving assembly is usually arranged between the hub shell and the ratchet seat of the hub, the ratchet driving assembly includes two driving rings, and the two driving rings respectively have ratchet teeth meshed axially, so that the two driving rings can be engaged and unidirectionally rotatable with each other.

Document DE 10 2012 020472 A1 discloses a freewheel hub for a bicycle comprising a hub axle, a hub housing rotatably mounted on the hub axle, a pinion arrangement rotatably mounted on the hub axle, a freewheel clutch arranged between the hub housing and the pinion arrangement. It discloses a driving ring as set forth in the preamble of claim 1.

Document DE 10 2010 033268 A1 relates to a rear hub for a bicycle, a rear wheel for a bicycle and a bicycle, and document US 9 212 708 B2 further refers to another conventional hub for at least partially muscle-powered vehicles.

However, conventionally, the ratchets of the two driving rings are in contact with their inclined surfaces in the axial direction, and the ratchets of the two driving rings are all vertical or pointed. Therefore, the corners of the inclined surfaces of the two driving rings are easily interfered, and the relatively inclined tooth surfaces cannot be flatly contacted, so that the meshing effect of the ratchets of the two driving rings is not good, thus resulting in poor transmission effect and considerable wear between parts.

The present invention is, therefore, arisen to obviate or at least mitigate the above-mentioned disadvantages.

### SUMMARY OF THE INVENTION

The main object of the present invention is to provide a driving ring and a hub device including the same which provides a precise engagement and connection.

To achieve the above and other objects, a driving ring as claimed in claim 1 is provided. The driving ring is configured to be assembled to and rotatable with a hub assembly and defines an axial direction, the drive ring includes a first axial side and a first circumferential side around the axial direction, the first axial side includes first ratchet teeth arranged around the axial direction and first grooves extending radially, the first circumferential side includes first engaging teeth arranged around the axial direction and engaged with the hub assembly, and between neighboring two of the first ratchet teeth is one of the first grooves.

To achieve the above and other objects, a hub device as claimed in claim 6 is further provided, wherein the hub device includes: a hub assembly including a hub shell and a ratchet seat, the hub shell including an axial hole and a first annular toothed portion around the axial direction, the ratchet seat and the hub shell being axially opposite to each other, the ratchet seat including a second annular toothed portion around the axial direction; a driving assembly including the drive ring of claim 1, and a second drive ring, the second drive ring including an axial side and a second circumferential side around the axial direction, the axial side of the second drive ring including a plurality of second ratchet teeth arranged around the axial direction, the second circumferential side including a plurality of second engaging teeth arranged around the axial direction and engaged with the hub assembly, the plurality of first engaging teeth and the plurality of second engaging teeth being engaged with the first annular toothed portion and the second annular toothed portion, respectively; an elastic member abutted against and between the hub assembly and the driving assembly so that the plurality of first ratchet teeth and the plurality of second ratchet teeth are axially engaged with each other and unidirectionally rotatable relative to each other; and a shaft disposed through the hub assembly, the driving assembly and the elastic member.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a stereogram of a hub device of an exemplary embodiment of the present invention;
Fig. 2 is a breakdown drawing of the hub device of an exemplary embodiment of the present invention;
Fig. 3 is another breakdown drawing of the hub device of an exemplary embodiment of the present invention;
Fig. 4 is a cross-sectional view of the hub device of an exemplary embodiment of the present invention;
Fig. 5 is a stereogram of a drive ring of an exemplary embodiment of the present invention;
Fig. 6 is a partial enlarged cross-sectional view of Fig. 4;
Figs. 7-9 are partial enlarged cross-sectional views of Fig. 6; and
Fig. 10 is a stereogram of another drive ring of another exemplary embodiment of the present invention.

### DETAILED DESCRIPTION OF THE PREFERRED EMBODIMENTS

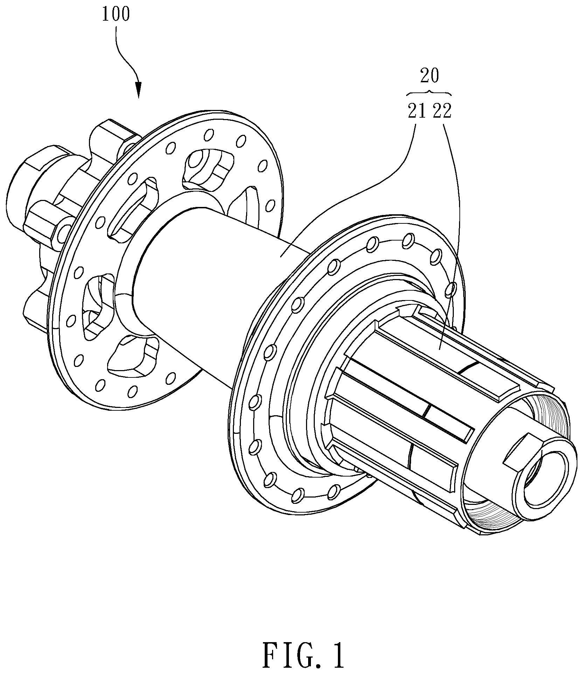

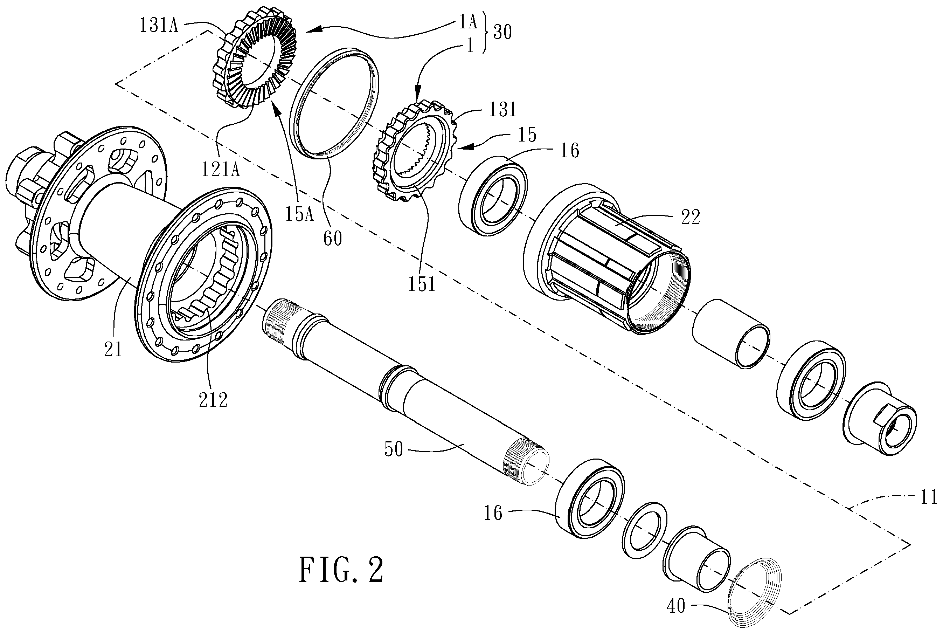

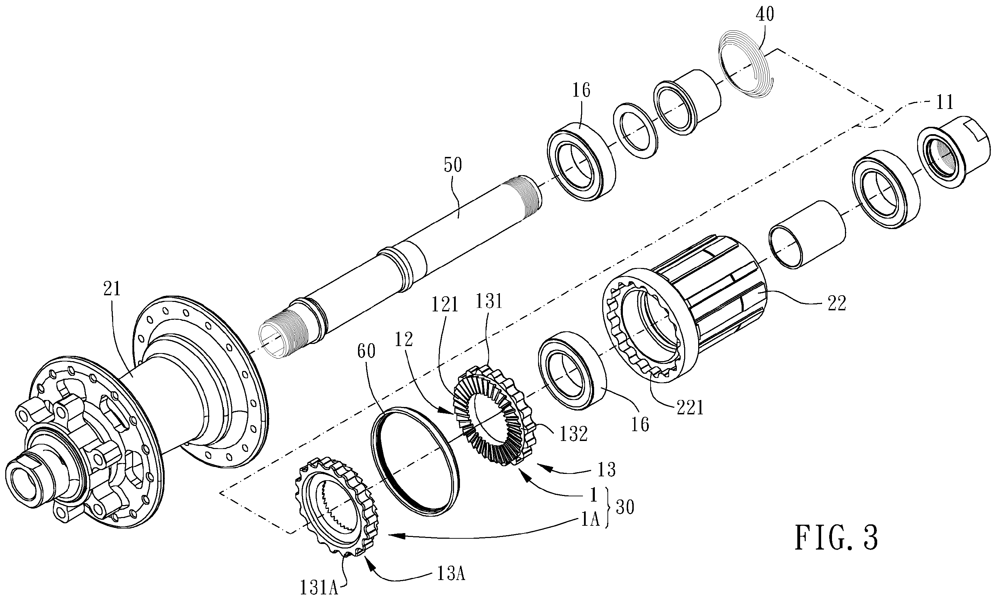

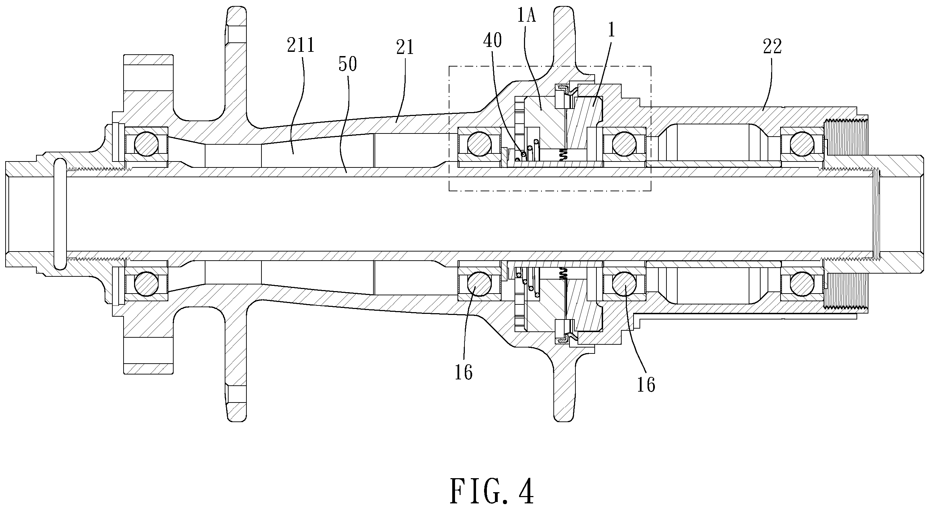

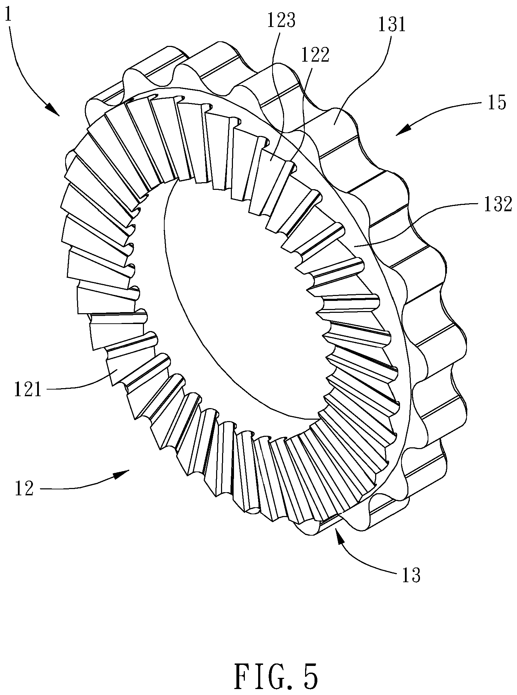

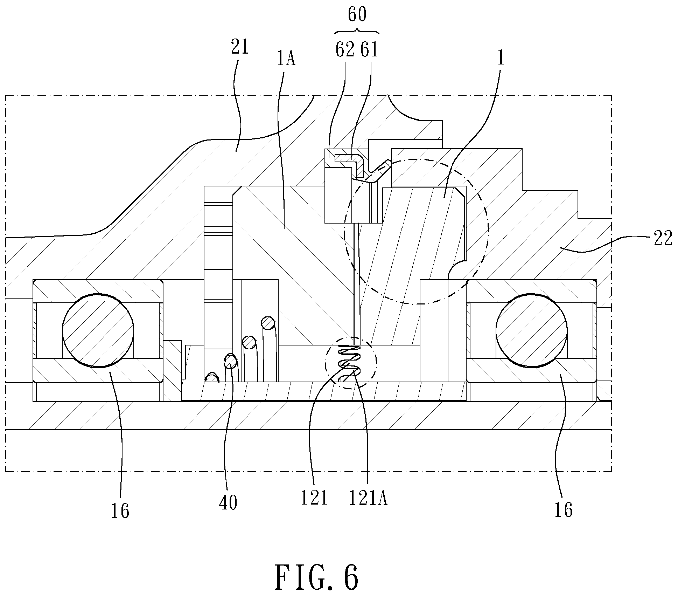

Please refer to Figs. 1 to 9 for an exemplary embodiment of the present invention. A driving ring 1 is configured to be assembled to and rotatable with a hub assembly 20, the drive ring 1 defines an axial direction 11, the drive ring 1 includes a first axial side 12 and a first circumferential side 13 around the axial direction 11, the first axial side 12 includes a plurality of first ratchet teeth 121 arranged around the axial direction 11 and a plurality of first grooves 122 extending radially, the first circumferential side 13 includes a plurality of first engaging teeth 131 arranged around the axial direction 11 and engaged with the hub assembly 20, and between neighboring two of the plurality of first ratchet teeth 121 is one of the plurality of first grooves 122.

The first groove 122 may be arcuate (in this embodiment) or polygonal. Specifically, the first groove 122 a depth equal to or larger than one fourth an axial height difference of an inclined surface 123 of the first ratchet tooth 121. The neighboring two of the plurality of first ratchet teeth 121 are separated by one of the plurality of first grooves 122, each of the plurality of first grooves 122 has a fixed span, and the plurality of first grooves 122 are diametrically symmetric. The plurality of first grooves 122 allow peaks located therewithin so that the inclined surface 123 can contact a surface with its entire area.

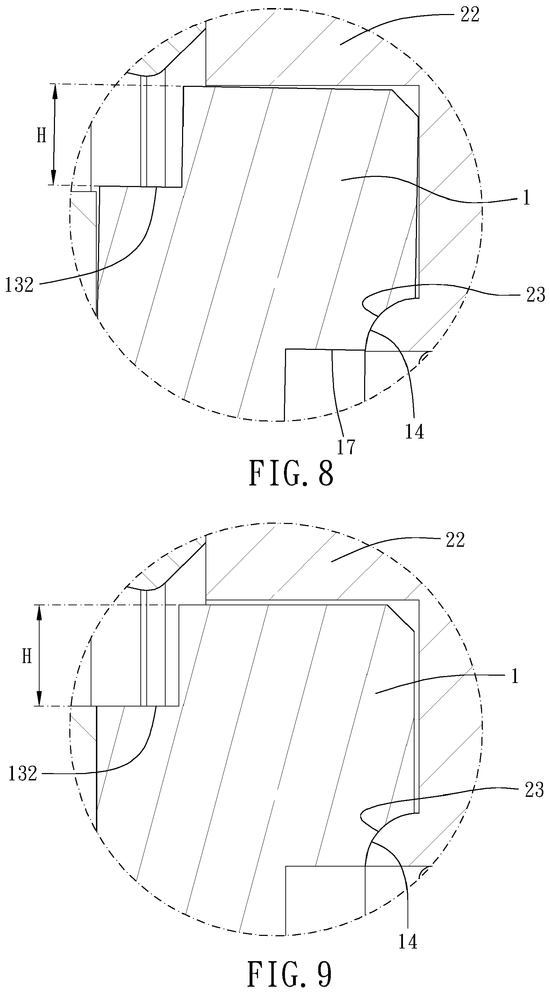

The drive ring further includes a first curved surface 14, and the first curved surface 14 is configured to be slidably abutted against the hub assembly 20 and pivotable relative to the axial direction 11 (Fig. 8 and Fig. 9). The number of the plurality of first ratchet teeth 121 is different from the number of the plurality of first engaging teeth 131. Preferably, the number of the plurality of first ratchet teeth 121 is preferably larger than the number of the plurality of first engaging teeth 131, and the number of the plurality of first ratchet teeth 121 is equal to or smaller than 1.5 times the number of the plurality of first engaging teeth 131, so that it is advantageous for smooth driving. There is a radial height difference H between the plurality of first ratchet teeth 121 and the plurality of first engaging teeth 131 for avoiding operation interference. Specifically, the plurality of first engaging teeth 131 includes an annular surface 132, and in the axial direction 11 the annular surface 132 has a width equal to or larger than one fourth a height of each of the plurality of first engaging teeth 131, which increases the structural strength and avoids operation interference.

The drive ring 1 further includes a second axial side 15 opposite to the first axial side 12, and an annular recess 151 is disposed on the second axial side 15 of the drive ring 1. Specifically, the first curved surface 14 extends about the axial direction 11, the drive ring 1 further includes an inner annular surface 17, the first curved surface 14 is connected and between the second axial side 15 and the inner annular surface 17 so that it provides good self-calibration and self-alignment effect. The first curved surface 14 may be concave or convex. In this embodiment, the first curved surface 14 is concave and the first curved surface 14 is arced so that it provides excellent self-calibration and self-alignment effect.

The invention further provides a hub device 100. The hub device 100 includes a hub assembly 20, a driving assembly 30, an elastic member 40 and a shaft 50.

The hub assembly 20 includes a hub shell 21 and a ratchet seat 22, the hub shell 21 includes an axial hole 211 and a first annular toothed portion 212 around the axial direction 11, the ratchet seat 22 and the hub shell 21 axial direction 11 are axially opposite to each other, and the ratchet seat 22 includes a second annular toothed portion 221 around the axial direction 11. The driving assembly 30 includes the drive ring 1, and a second drive ring 1A. The second drive ring 1A includes an axial side 15A and a second circumferential side 13A around the axial direction 11, the axial side 15A includes a plurality of second ratchet teeth 121A arranged around the axial direction 11, the second circumferential side 13A includes a plurality of second engaging teeth 131A arranged around the axial direction 11 and engaged with the hub assembly 20, and the plurality of first engaging teeth 131 and the plurality of second engaging teeth 131A are engaged with the first annular toothed portion 212 and the second annular toothed portion 221, respectively. The elastic member 40 is abutted against and between the hub assembly 20 and the driving assembly 30 so that the plurality of first ratchet teeth 121 and the plurality of second ratchet teeth 121A are axially engaged with each other and unidirectionally rotatable relative to each other. The shaft 50 is disposed through the hub assembly 20, the driving assembly 30 and the elastic member 40. In this embodiment, the drive ring 1 is engaged with the ratchet seat 22, and the second drive ring 1A is engaged in the hub shell 21; however, the arrangement relationship of the drive ring 1 and the second drive ring 1A is interchangeable.

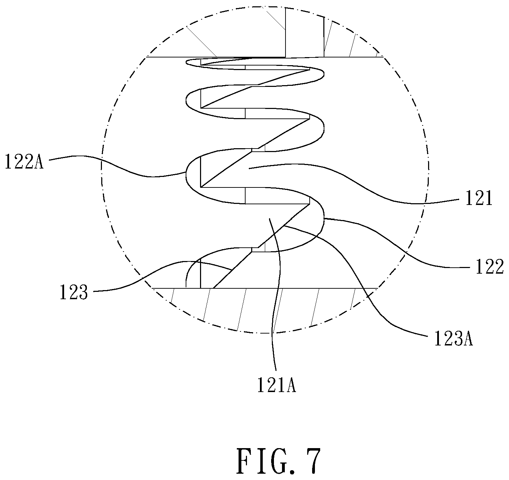

The axial side 15A further includes a plurality of second grooves 122A, between neighboring two of the plurality of second ratchet teeth 121A is one of the plurality of second grooves 122A, a peak of each of the plurality of first ratchet teeth 121 is located within one of the plurality of second grooves 122A, and a peak of each of the plurality of second ratchet teeth 121A is located within one of the plurality of first grooves 122 (Fig. 7). As such, the peak of each of the plurality of first ratchet teeth 121 and the peak of each of the plurality of second ratchet teeth 121A cannot interfere and be blocked, and thus the inclined surface 123 of each of the plurality of first ratchet teeth 121 and the inclined surface 123A of each of the plurality of second ratchet teeth 121A can be engaged with each other and so that the drive ring 1 and the second drive ring 1A can engaged with each other precisely.

The hub assembly 20 further includes a second curved surface 23, and the first curved surface 14 and the second curved surface 23 face and abut each other. The hub device 100 further includes an annular member 60 disposed around the driving assembly 30, and the annular member 60 is annularly abutted against and between the hub shell 21 and the ratchet seat 22. The annular member 60 includes a metal ring body 61 and an elastic ring body 62 within which the metal ring body 61 is disposed. The metal ring body 61 has an L-shaped cross-section, the elastic ring body 62 has a Z-shaped cross-section, and an end of the elastic ring body 62 is inclined to the axial direction 11 and abutted against an axial end surface of the ratchet seat 22. The elastic member 40 axially urges the second drive ring 1A toward the second drive ring 1A. Through cooperation of the first curved surface 14 and the second curved surface 23, it carries out effective self-calibration and self-alignment of the drive ring and the second drive ring 1A (Fig. 8 and Fig. 9), which improves the transmission effect and reduce wear of parts. Preferably, a bearing 16 is disposed between the hub shell 21 and the shaft 50, and a bearing 16 is disposed between the ratchet seat 22 and the shaft 50, which lowers the rotational friction resistance.

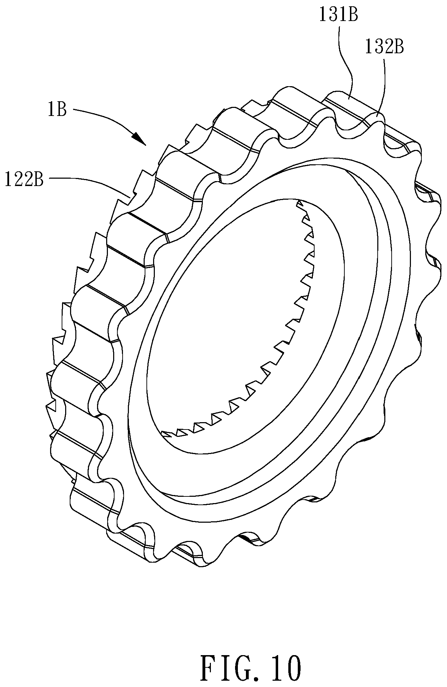

In other exemplary embodiments, the first groove 122B of the drive ring 1B is polygonal, a chamfer 132B (curved chamfer or flat chamfer) is disposed at a periphery of the first engaging tooth 131B of the drive ring 1B (Fig. 10), which provides further improvement of the self-alignment of the meshing of the drive ring with the second drive ring.

## Claims

1. A driving ring (1) configured to be assembled to and rotatable with a hub assembly (20) and defining an axial direction (11), the drive ring including a first axial side (12) and a first circumferential side (13) around the axial direction (11), the first axial side (12) including a plurality of first ratchet teeth (121) extending radially and arranged around the axial direction (11), and a plurality of first grooves (122) extending radially and arranged around the axial direction (11), the plurality of first ratchet teeth (121) and the plurality of first grooves (122) being alternatively arranged around the axial direction (11), each of the plurality of first grooves (122) extending and being recessed between neighboring two of the plurality of first ratchet teeth (121), the first circumferential side (13) including a plurality of first engaging teeth (131) arranged around the axial direction (11) and engaged with the hub assembly (20), between neighboring two of the plurality of first ratchet teeth (121) being one of the plurality of first grooves (122), **characterized in that**
the drive ring (1) further includes a first curved surface (14), and the first curved surface (14) is configured to be slidably abutted against the hub assembly (20) and pivotable relative to the axial direction (11), wherein the first curved surface (14) extends about the axial direction (11), the drive ring (1) further includes an inner annular surface (17), the drive ring (1) further includes a second axial side (15) opposite to the first axial side (12), an annular recess (151) is disposed on the second axial side (15) of the drive ring (1), and the first curved surface (14) is connected and between the second axial side (15) and the inner annular surface (17).

2. The driving ring (1) of claim 1, wherein there is a radial height difference (H) between the plurality of first ratchet teeth (121) and the plurality of first engaging teeth (131).

3. The driving ring (1) of claim 1, wherein the first groove (122) is arcuate or polygonal.

4. The driving ring (1) of claim 3, wherein the first groove (122) has a depth equal to or larger than one fourth an axial height difference of an inclined surface (123) of the first ratchet tooth (121).

5. The driving ring (1) of claim 4, wherein the number of the plurality of first ratchet teeth (121) is different from the number of the plurality of first engaging teeth (131); there is a radial height difference (H) between the plurality of first ratchet teeth (121) and the plurality of first engaging teeth (131); the neighboring two of the plurality of first ratchet teeth (121) are separated by one of the plurality of first grooves (122); each of the plurality of first grooves (122) has a fixed span; the plurality of first grooves (122) are diametrically symmetric; the first curved surface (14) is concave; the first curved surface (14) is arched; the plurality of first engaging teeth (131) include an annular surface (132).

6. A hub device (100) including:
a hub assembly (20) including a hub shell (21) and a ratchet seat (22), the hub shell (21) including an axial hole (211) and a first annular toothed portion (212) around the axial direction (11), the ratchet seat (22) and the hub shell (21) being axially opposite to each other, the ratchet seat (22) including a second annular toothed portion (221) around the axial direction (11);
a driving assembly (30) including the drive ring (1) of claim 1, and a second drive ring (1A), the second drive ring (1A) including an axial side (15A) and a second circumferential side (13A) around the axial direction (11), the axial side (15A) of the second drive ring (1A) including a plurality of second ratchet teeth (121A) arranged around the axial direction (11), the second circumferential side (13A) including a plurality of second engaging teeth (131A) arranged around the axial direction (11) and engaged with the hub assembly (20), the plurality of first engaging teeth (131) and the plurality of second engaging teeth (131A) being engaged with the first annular toothed portion (212) and the second annular toothed portion (221), respectively;
an elastic member (40) abutted against and between the hub assembly (20) and the driving assembly (30) so that the plurality of first ratchet teeth (121) and the plurality of second ratchet teeth (121A) are axially engaged with each other and unidirectionally rotatable relative to each other; and
a shaft (50) disposed through the hub assembly (20), the driving assembly (30) and the elastic member (40).

7. The hub device (100) of claim 6, wherein the axial side (15A) further includes a plurality of second grooves (122A) extending radially, between neighboring two of the plurality of second ratchet teeth (121A) is one of the plurality of second grooves (122A), a peak of each of the plurality of first ratchet teeth (121) is located within one of the plurality of second grooves (122A), and a peak of each of the plurality of second ratchet teeth (121A) is located within one of the plurality of first grooves (122).

8. The hub device (100) of claim 6, further including an annular member (60) disposed around the driving assembly (30), wherein the annular member (60) is annularly abutted against and between the hub shell (21) and the ratchet seat (22).

9. The hub device (100) of claim 8, wherein the annular member (60) includes a metal ring body (61) and an elastic ring body (62) within which the metal ring body (61) is disposed.

10. The hub device (100) of claim 6, wherein the hub assembly (20) further includes a second curved surface (23), and the first curved surface (14) and the second curved surface (23) face and abut each other.

## Patentansprüche

1. Antriebsring (1), der zur Montage an und drehbar mit einer Nabenbaugruppe (20) konfiguriert ist und eine axiale Richtung (11) definiert, wobei der Antriebsring eine erste axiale Seite (12) und eine erste Umfangsseite (13) um die axiale Richtung umfasst, wobei die erste axiale Seite (12) eine Vielzahl von ersten Sperrklinkenzähnen (121), die sich radial erstrecken und um die axiale Richtung (11) angeordnet sind, und eine Vielzahl von ersten Rillen (122) umfasst, die sich radial erstrecken und um die axiale Richtung (11) angeordnet sind, wobei die Vielzahl von ersten Sperrklinkenzähnen (121) und die Vielzahl von ersten Rillen (122) abwechselnd um die axiale Richtung (11) angeordnet sind, wobei jede der Vielzahl von ersten Rillen (122) sich zwischen zwei benachbarten der Vielzahl von ersten Sperrklinkenzähnen (121) erstreckt und vertieft ist, wobei die erste Umfangsseite (13) eine Vielzahl von ersten Eingriffszähnen (131) umfasst, die um die axiale Richtung (11) angeordnet sind und mit der Nabenbaugruppe (20) in Eingriff stehen, wobei zwischen zwei benachbarten der Vielzahl von ersten Sperrklinkenzähnen (121) eine der Vielzahl von ersten Rillen (122) liegt,
**dadurch gekennzeichnet, dass**
der Antriebsring (1) ferner eine erste gekrümmte Oberfläche (14) aufweist und die erste gekrümmte Oberfläche (14) so konfiguriert ist, dass sie verschiebbar an der Nabenbaugruppe (20) anliegt und relativ zur axialen Richtung (11) schwenkbar ist, wobei sich die erste gekrümmte Oberfläche (14) über die axiale Richtung (11) erstreckt, wobei der Antriebsring (1) ferner eine innere Ringfläche (17) umfasst, wobei der Antriebsring (1) ferner eine zweite axiale Seite (15) aufweist, die der ersten axialen Seite (12) gegenüberliegt, wobei eine ringförmige Aussparung (151) an der zweiten axialen Seite (15) des Antriebsrings (1) angeordnet ist, und die erste gekrümmte Oberfläche (14) ist verbunden mit und zwischen der zweiten axialen Seite (15) und der inneren Ringfläche (17).

2. Antriebsring (1) nach Anspruch 1, bei welchem ein radialer Höhenunterschied (H) zwischen der Vielzahl von ersten Sperrklinkenzähnen (121) und der Vielzahl von ersten Eingriffszähnen (131) besteht.

3. Antriebsring (1) nach Anspruch 1, bei welchem die erste Rille (122) bogenförmig oder polygonal ist.

4. Antriebsring (1) nach Anspruch 3, bei welchem die erste Rille (122) eine Tiefe hat, die gleich oder größer als ein Viertel eines axialen Höhenunterschieds einer geneigten Fläche (123) des ersten Sperrklinkenzahns (121) ist.

5. Antriebsring (1) nach Anspruch 4, bei welchem die Anzahl der Vielzahl von ersten Sperrklinkenzähnen (121) von der Anzahl der Vielzahl von ersten Eingriffszähnen (131) verschieden ist; wobei es einen radialen Höhenunterschied (H) zwischen der Vielzahl von ersten Sperrklinkenzähnen (121) und der Vielzahl von ersten Eingriffszähnen (131) gibt; wobei die benachbarten zwei der Vielzahl von ersten Sperrklinkenzähnen (121) durch eine der Vielzahl von ersten Rillen (122) voneinander getrennt sind; wobei jede der Vielzahl von ersten Rillen (122) eine feste Spannweite hat; wobei die Vielzahl von ersten Rillen (122) diametral symmetrisch sind; wobei die erste gekrümmte Oberfläche (14) konkav ist; wobei die erste gekrümmte Oberfläche (14) gewölbt ist; wobei die Vielzahl von ersten Eingriffszähnen (131) eine Ringfläche (132) aufweisen.

6. Nabenvorrichtung (100), welche umfasst:
eine Nabenbaugruppe (20), die eine Nabenhülle (21) und einen Sperrklinkensitz (22) umfasst, wobei die Nabenhülle (21) ein axiales Loch (211) und einen ersten ringförmigen Zahnabschnitt (212) um die axiale Richtung (11) umfasst, wobei der Sperrklinkensitz (22) und die Nabenhülle (21) sich axial gegenüberliegen, wobei der Sperrklinkensitz (22) einen zweiten ringförmigen Zahnabschnitt (221) um die axiale Richtung (11) umfasst;
eine Antriebsbaugruppe (30), die den Antriebsring (1) nach Anspruch 1 beinhaltet, und einen zweiten Antriebsring (1A), wobei der zweite Antriebsring (1A) eine axiale Seite (15A) und eine zweite Umfangsseite (13A) um die axiale Richtung (11) aufweist, wobei die axiale Seite (15A) des zweiten Antriebsrings (1A) eine Vielzahl von zweiten Sperrklinkenzähnen (121A) umfasst, die um die axiale Richtung (11) angeordnet sind, wobei die zweite Umfangsseite (13A) eine Vielzahl von zweiten Eingriffszähnen (131A) umfasst, die um die axiale Richtung (11) angeordnet sind und mit der Nabenbaugruppe (20) in Eingriff stehen, wobei die Vielzahl von ersten Eingriffszähnen (131) und die Vielzahl von zweiten Eingriffszähnen (131A) entsprechend mit dem ersten ringförmigen Zahnabschnitt (212) und dem zweiten ringförmigen Zahnabschnitt (221) in Eingriff stehen;
ein elastisches Element (40), das an der Nabenbaugruppe (20) und der Antriebsbaugruppe (30) anliegt und sich dazwischen befindet, sodass die Vielzahl von ersten Sperrklinkenzähnen (121) und die Vielzahl von zweiten Sperrklinkenzähnen (121A) axial miteinander in Eingriff stehen und relativ zueinander unidirektional drehbar sind; und
eine Welle (50), die durch die Nabenbaugruppe (20), die Antriebsbaugruppe (30) und das elastische Element (40) angeordnet ist.

7. Nabenvorrichtung (100) nach Anspruch 6, bei welcher die axiale Seite (15A) ferner eine Vielzahl von zweiten Rillen (122A) umfasst, die sich radial erstrecken, wobei zwischen benachbarten zwei der Vielzahl von zweiten Sperrklinkenzähnen (121A) eine der Vielzahl von zweiten Rillen (122A) liegt, wobei sich eine Spitze von jedem der Vielzahl von ersten Sperrklinkenzähnen (121) innerhalb von einer der Vielzahl von zweiten Rillen (122A) befindet, und sich eine Spitze von jedem der Vielzahl von zweiten Sperrklinkenzähnen (121A) innerhalb von einer der Vielzahl von ersten Rillen (122) befindet.

8. Nabenvorrichtung (100) nach Anspruch 6, welche ferner ein ringförmiges Element (60) umfasst, das um die Antriebsbaugruppe (30) angeordnet ist, wobei das ringförmige Element (60) ringförmig anliegend an und zwischen der Nabenhülle (21) und dem Sperrklinkensitz (22) ist.

9. Nabenvorrichtung (100) nach Anspruch 8, bei welcher das ringförmige Element (60) einen Metallringkörper (61) und einen elastischen Ringkörper (62) umfasst, in dem der Metallringkörper (61) angeordnet ist.

10. Nabenvorrichtung (100) nach Anspruch 6, bei welcher die Nabenbaugruppe (20) ferner eine zweite gekrümmte Oberfläche (23) umfasst und die erste gekrümmte Oberfläche (14) und die zweite gekrümmte Oberfläche (23) einander zugewandt sind und aneinander anliegen.

## Revendications

1. Bague d'entraînement (1) configurée pour être assemblée à et mise en rotation par un ensemble moyeu (20) et définissant une direction axiale (11), la bague d'entraînement incluant un premier côté axial (12) et un premier côté circonférentiel (13) autour de la direction axiale (11), le premier côté axial (12) incluant une pluralité de premières dents d'encliquetage (121) s'étendant radialement et agencées autour de la direction axiale (11), et une pluralité de premières rainures (122) s'étendant radialement et agencées autour de la direction axiale (11), la pluralité de premières dents d'encliquetage (121) et la pluralité de premières rainures (122) étant agencées en alternance autour de la direction axiale (11), chacune de la pluralité de premières rainures (122) s'étendant et étant en retrait entre deux dents voisines de la pluralité de premières dents d'encliquetage (121) , le premier côté circonférentiel (13) incluant une pluralité de premières dents de mise en prise (131) agencées autour de la direction axiale (11) et l'une de la pluralité de premières rainures (122) étant en prise avec l'ensemble moyeu (20), entre deux dents voisines de la pluralité de premières dents d'encliquetage (121),
**caractérisée en ce que**
la bague d'entraînement (1) inclut en outre une première surface incurvée (14), et la première surface incurvée (14) est configurée pour appuyer de manière coulissante contre l'ensemble moyeu (20) et pouvant pivoter par rapport à la direction axiale (11), dans laquelle la première surface incurvée (14) s'étend autour de la direction axiale (11), la bague d'entraînement (1) inclut en outre une surface annulaire intérieure (17), la bague d'entraînement (1) inclut en outre un second côté axial (15) opposé au premier côté axial (12), un évidement annulaire (151) est disposé sur le second côté axial (15) de la bague d'entraînement (1), et la première surface incurvée (14) est reliée au second côté axial (15) et à la surface annulaire intérieure (17) et située entre ceux-ci.

2. Bague d'entraînement (1) selon la revendication 1, dans laquelle il existe une différence de hauteur radiale (H) entre la pluralité de premières dents d'encliquetage (121) et la pluralité de premières dents de mise en prise (131).

3. Bague d'entraînement (1) selon la revendication 1, dans laquelle la première rainure (122) est arquée ou polygonale.

4. Bague d'entraînement (1) selon la revendication 3, dans laquelle la première rainure (122) présente une profondeur égale ou supérieure au quart d'une différence de hauteur axiale d'une surface inclinée (123) de la première dent d'encliquetage (121).

5. Bague d'entraînement (1) selon la revendication 4, dans laquelle le nombre de la pluralité de premières dents d'encliquetage (121) est différent du nombre de la pluralité de premières dents de mise en prise (131) ; il existe une différence de hauteur radiale (H) entre la pluralité de premières dents d'encliquetage (121) et la pluralité de premières dents de mise en prise (131) ; les deux dents voisines de la pluralité de premières dents d'encliquetage (121) sont séparées par l'une de la pluralités de premières rainures (122) ; chacune de la pluralité de premières rainures (122) présente une taille fixe ; la pluralité de premières rainures (122) sont diamétralement symétriques ; la première surface incurvée (14) est concave ; la première surface incurvée (14) est arquée ; la pluralité de premières dents de mise en prise (131) incluent une surface annulaire (132).

6. Dispositif de moyeu (100) incluant :
un ensemble moyeu (20) incluant une coque de moyeu (21) et un siège d'encliquetage (22), la coque de moyeu (21) incluant un trou axial (211) et une première partie annulaire dentée (212) autour de la direction axiale (11), le siège d'encliquetage (22) et la coque de moyeu (21) étant axialement opposés l'un à l'autre, le siège d'encliquetage (22) incluant une seconde partie annulaire dentée (221) autour de la direction axiale (11) ;
un ensemble d'entraînement (30) incluant la bague d'entraînement (1) selon la revendication 1 et une seconde bague d'entraînement (1A), la seconde bague d'entraînement (1A) incluant un côté axial (15A) et un second côté circonférentiel (13A) autour de la direction axiale (11), le côté axial (15A) de la seconde bague d'entraînement (1A) incluant une pluralité de secondes dents d'encliquetage (121A) agencées autour de la direction axiale (11), le second côté circonférentiel (13A) incluant une pluralité de secondes dents de mise en prise (131A) agencées autour de la direction axiale (11) et en prise avec l'ensemble moyeu (20), la pluralité de premières dents de mise en prise (131) et la pluralité de secondes dents de mise en prise (131A) étant respectivement en prise avec la première partie annulaire dentée (212) et la seconde partie annulaire dentée (221) ;
un élément élastique (40) étant en butée contre l'ensemble moyeu (20) et l'ensemble d'entraînement (30) et situé entre ceux-ci, de sorte que la pluralité de premières dents d'encliquetage (121) et la pluralité de secondes dents d'encliquetage (121A) soient axialement en prise les unes avec les autres et tournent de manière unidirectionnelle les unes par rapport aux autres ; et
un arbre (50) disposé à travers l'ensemble moyeu (20), l'ensemble d'entraînement (30) et l'élément élastique (40).

7. Dispositif de moyeu (100) selon la revendication 6, dans lequel le côté axial (15A) inclut en outre une pluralité de secondes rainures (122A) s'étendant radialement, l'une de la pluralité de secondes rainures (121A) est située entre deux dents voisines de la pluralité de secondes dents d'encliquetage (122A), un sommet de chacune de la pluralité de premières dents d'encliquetage (121) est situé dans l'une de la pluralité de secondes rainures (122A), et un sommet de chacune de la pluralité de secondes dents d'encliquetage (121A) est situé dans l'une de la pluralité de premières rainures (122).

8. Dispositif de moyeu (100) selon la revendication 6, incluant en outre un élément annulaire (60) disposé autour de l'ensemble d'entraînement (30), dans lequel l'élément annulaire (60) appuie en décrivant une forme d'anneau contre la coque de moyeu (21) et le siège d'encliquetage (22) et est situé entre ceux-ci.

9. Dispositif de moyeu (100) selon la revendication 8, dans lequel l'élément annulaire (60) inclut un corps de bague métallique (61) et un corps de bague élastique (62) dans lequel est disposé le corps de bague métallique (61).

10. Dispositif de moyeu (100) selon la revendication 6, dans lequel l'ensemble moyeu (20) inclut en outre une seconde surface incurvée (23), et la première surface incurvée (14) et la seconde surface incurvée (23) se font face et sont en butée l'une contre l'autre.
